Europäisches Patentamt

European Patent Office

Office européen des brevets

(19)

(11) **EP 1 623 514 B1**

(12) **FASCICULE DE BREVET EUROPEEN**

(45) Date de publication et mention
de la délivrance du brevet:
**20.09.2006 Bulletin 2006/38**

(51) Int Cl.:
**H04B 7/06** (2006.01)    **H04B 7/08** (2006.01)
**H04B 1/707** (2006.01)

(21) Numéro de dépôt: **04742658.0**

(86) Numéro de dépôt international:
**PCT/FR2004/001096**

(22) Date de dépôt: **06.05.2004**

(87) Numéro de publication internationale:
**WO 2004/102826 (25.11.2004 Gazette 2004/48)**

(54) **MODULATEUR ET DEMODULATEUR A ETALEMENT DE SPECTRE**

SPREIZSPEKTRUMMODULATOR UND -DEMODULATOR

SPREAD-SPECTRUM MODULATOR AND DEMODULATOR

(84) Etats contractants désignés:
**AT BE BG CH CY CZ DE DK EE ES FI FR GB GR
HU IE IT LI LU MC NL PL PT RO SE SI SK TR**

(30) Priorité: **14.05.2003 FR 0305796**

(43) Date de publication de la demande:
**08.02.2006 Bulletin 2006/06**

(73) Titulaire: **Nortel Networks Limited
St.Laurent, Quebec H4S 2A9 (CA)**

(72) Inventeurs:
• **EL NAHAS EL HOMSI, Hassan
F-75015 Paris (FR)**

• **ABDI, Moussa
F-75015 Paris (FR)**
• **JARD, Alexandre
F-92150 Suresnes (FR)**

(74) Mandataire: **Loisel, Bertrand
Cabinet Plasseraud
65/67, rue de la Victoire
F-75440 Paris Cedex 09 (FR)**

(56) Documents cités:
**EP-A- 0 668 662          US-A1- 2002 172 293**

**Description**

La présente invention concerne les techniques de diversité d'émission utilisées le domaine des radiocommunications à étalement de spectre. Elle s'applique notamment aux radiocommunications avec accès multiple par répartition de codes (CDMA, "code-division multiple access").

On considère un canal de transmission entre un émetteur pourvu de n antennes d'émission et un récepteur pourvu de m antennes de réception. Un code d'étalement c(t), constitué par une séquence périodique d'échantillons complexes appelés "chips" de cadence $f_c$, est alloué à ce canal. Il sert à moduler n séquences de symboles complexes $s_i(t)$ ($1 \leq i \leq n$) ayant une cadence de symboles $f_s$ plus petite que $f_c$. Le rapport SF = $f_c/f_s$ est le facteur d'étalement du canal. Le signal $y_j(t)$ capté par la j-ième antenne de réception ($1 \leq j \leq m$) s'écrit:

$$y_j(t) = \sum_{i=1}^{n} s_i(t) \left[ c(t) \otimes h_{ij}(t) \right] + w(t) \qquad (1)$$

où $\otimes$ désigne l'opération de convolution, et w(t) désigne du bruit supposé blanc et gaussien. Pour un même utilisateur, le même code d'étalement est utilisé sur les différentes antennes d'émission. Dans un système CDMA, le bruit w(t) contient des contributions relatives à d'autres utilisateurs du système.

La réponse impulsionnelle $h_{ij}(t)$ du canal de propagation entre la i-ième antenne d'émission et la j-ième antenne de réception est classiquement estimée par le récepteur grâce à des séquences pilotes connues respectivement émises par les n antennes d'émission. Elle est généralement modélisée par un ensemble de p trajets pris en compte par couple d'antennes (p ≥1), le k-ième trajet ($1 \leq k \leq p$) correspondant à un retard de réception $\tau_k$ et à une amplitude complexe de réception $a_{ijk}$. Chaque canal de propagation (i-ième antenne d'émission vers j-ième antenne de réception) est ainsi associé par le récepteur à un vecteur de p amplitudes: $A_{ij} = [a_{ij1}\ a_{ij2}\ ...\ a_{ijp}]^T$ (la notation $[.]^T$ désigne la transposition).

La démodulation dans un système à spectre étalé consiste à désétaler le signal reçu au niveau de chaque écho, par corrélation du signal reçu avec le code d'étalement. Le récepteur le plus couramment utilisé est le récepteur "rake", dans lequel le signal issu de chaque antenne j est soumis à un filtre adapté au code d'étalement dont la sortie est échantillonnée aux instants correspondant aux p trajets identifiés. Ceci fournit un vecteur Z = $[z_{11} \cdots z_{1p} \cdots z_{m1} \cdots z_{mp}]^T$, où $z_{jk}$ désigne la sortie du filtre adapté relatif à l'antenne j, échantillonnée avec le retard $\tau_k$. Ainsi, à un temps symbole donné, on obtient le système d'équations:

$$Z = HS + N \qquad (2)$$

où • $H = \begin{bmatrix} A_{11} & \cdots & A_{n1} \\ \vdots & \ddots & \vdots \\ A_{1m} & \cdots & A_{nm} \end{bmatrix}$ est une matrice représentative du canal global, de mp lignes et n colonnes;

- S = $[s_1 \cdots s_n]^T$ est un vecteur contenant les n symboles transmis au temps considéré depuis les n antennes d'émission; et
- N est un vecteur de bruit de taille mp.

Le système (2) est d'une forme très couramment rencontrée en traitement du signal. Il se résout facilement par une méthode classique d'estimation par moindres carrés (MMSE, "minimum mean squared error") à condition que le rang de la matrice H soit au moins égal à n. La solution MMSE s'écrit:

$$\hat{S} = \left( H^* H \right)^{-1} H^* Z \qquad (3)$$

En supposant que les antennes ne sont pas parfaitement corrélées, le rang de la matrice H est généralement égal au minimum des entiers n et mp. La condition nécessaire et suffisante pour pouvoir résoudre le système (2) par la méthode MMSE est alors mp ≥n. Une fois cette condition vérifiée, il est possible de résoudre le système selon la technique souhaitée, par la méthode MMSE ou par une autre méthode telle que par exemple l'estimation de séquence au maximum de vraisemblance (MLSE, "maximum likelihood séquence estimation"; cette méthode MLSE peut aussi être appliquée quand mp < n, mais elle est alors très instable et sensible au bruit).

Les performances du récepteur dépendent du conditionnement de la matrice du canal H, lequel dépend du nombre m d'antennes de réception, du nombre p de trajets et des propriétés de décorrélation des antennes. Des antennes corrélées provoquent un mauvais conditionnement du fait que la matrice H*H a alors des valeurs propres proches de zéro qui perturbent son inversion dans la résolution selon (3). En général, le concepteur d'une station radio à antennes multiples fait en sorte qu'elles soient décorrélées, en les espaçant suffisamment les unes des autres et/ou en les faisant rayonner selon des polarités différentes.

Dans les systèmes connus à entrées multiples et sorties multiples (MIMO, "multiple input - multiple output"), ce qui signifie que n ≥2 et m ≥2, on cherche à augmenter le débit de communication accessible pour une puissance émise donnée, en faisant émettre des symboles différents $s_1$, ..., $s_n$ par les n antennes d'émission. Ces symboles peuvent être mutuellement corrélés, s'ils sont issus d'un codage spatio-temporel, ou indépendants. Pour respecter à coup sûr la condition sur le rang de la matrice H, on est amené à équiper le récepteur d'au moins n antennes de réception. Sinon le système (2) serait insoluble en présence d'un seul trajet.

Des exemples de tels systèmes MIMO sont décrits dans EP 0 817 401, EP 0 951 091, EP 1 117 197, WO 99/14871, WO 99/45657, et EP 0 668 662.

Un but de la présente invention est d'améliorer les performances de la chaîne de transmission dans un schéma de diversité d'émission à n antennes.

L'invention propose ainsi un modulateur à étalement de spectre pour convertir n séquences d'entrée composées de symboles numériques en n séquences à spectre étalé dans un émetteur radio, n étant un nombre au moins égal à 2. Ce modulateur comprend un générateur de code d'étalement et des moyens de combinaison du code d'étalement avec les n séquences d'entrée pour produire les n séquences à spectre étalé pour l'émission depuis n antennes respectives de l'émetteur radio. Selon l'invention, les moyens de combinaison sont agencés pour que chaque séquence à spectre étalé corresponde à une somme d'au moins deux contributions mutuellement décalées d'un temps sensiblement inférieur à la durée d'un symbole, chaque contribution étant le produit d'une version d'une des n séquences d'entrée par le code d'étalement.

La discussion précédente montre une certaine dualité entre le nombre m d'antennes de réception et le nombre p de trajets. Le nombre m étant généralement limité pour des raisons de coût en matériel ou d'encombrement (notamment dans un terminal mobile), le modulateur proposé a pour avantage d'accroître le rang de la matrice H grâce à une augmentation du nombre de trajets pris en compte dans le système (2). Cette augmentation résulte de la création artificielle d'un ou plusieurs échos supplémentaires correspondant aux contributions décalées d'un temps prédéfini.

Ces contributions auront typiquement des décalages mutuels correspondant à la durée d'un ou plusieurs chips du code d'étalement. Un décalage d'une durée de chip est préféré car il minimise l'allongement de la réponse impulsionnelle et, dans un système CDMA, la dégradation de l'orthogonalité des codes employés.

Dans une réalisation du modulateur, l'augmentation du nombre de trajets est effectuée en filtrant le signal d'émission de chaque antenne par un filtre contenant au moins deux échos. Pour que le rang de la matrice du canal global soit augmenté, ces filtres doivent différer d'une antenne à une autre. En particulier, dans un cas où n = 2, l'une des deux séquences à spectre étalé correspond à une somme de deux contributions identiques mutuellement décalées, égales au produit de l'une des deux séquences d'entrée par le code d'étalement, tandis que l'autre des deux séquences à spectre étalé correspond à une somme de deux contributions opposées mutuellement décalées, l'une de ces deux contributions opposées étant égale au produit de l'autre des deux séquences d'entrée par le code d'étalement. Le premier filtre a alors pour expression $g_1(t) = \dfrac{1 + \delta(t - T_c)}{\sqrt{2}}$, où δ désigne la fonction de Dirac et $T_c$ le temps chip, tandis que le second filtre a pour expression $g_2(t) = \dfrac{1 - \delta(t - T_c)}{\sqrt{2}}$.

Dans une réalisation préférée du modulateur, les contributions sommées avec décalage temporel pour former chaque séquence à spectre étalé sont respectivement obtenues à partir de séquences d'entrée distinctes. Dans ces conditions, un symbole transmis qui bénéficie d'un ou plusieurs trajets existant depuis une antenne d'émission donnée contribue aussi au signal émis depuis une autre antenne d'émission et bénéficie donc d'un ou plusieurs autres trajets. Cette diversité d'émission du symbole diminue sa sensibilité aux évanouissements de canal, de sorte qu'il peut être détecté dans de meilleures conditions par le récepteur.

Le gain obtenu peut être de l'ordre de 3 dB.

En particulier, dans un cas où n = 2 et les symboles sont complexes, l'une des deux séquences à spectre étalé correspond à une somme d'une première et d'une seconde contributions mutuellement décalées tandis que l'autre des deux séquences à spectre étalé correspond à une somme d'une troisième et d'une quatrième contributions mutuellement décalées, la première contribution étant le produit d'une première des deux séquences d'entrée par le code d'étalement, la seconde contribution étant l'opposé du produit du complexe conjugué de la seconde séquence d'entrée par le code d'étalement, la troisième contribution étant le produit de la seconde séquence d'entrée par le code d'étalement, et la quatrième contribution étant le produit du complexe conjugué de la première séquence d'entrée par le code d'étalement.

Une diversité d'émission du même genre est réalisée dans des schémas connus de diversité dans l'espace et dans le temps (STTD, "space-time transmit diversity). Cependant, le décalage entre les contributions respectivement émises par les antennes et provenant d'un même symbole dans le schéma STTD classique sont décalées d'un temps symbole, de sorte que ce schéma n'engendre pas d'échos supplémentaires dans la réponse impulsionnelle et ne procure aucun gain en débit. Un schéma STTD est notamment normalisé dans le cadre des réseaux UMTS ("universal mobile telecommunication system"). Voir section 5.3.1 de la spécification technique TS 25.211, "Physical channels and mapping of transport channels onto physical channels (FDD) (Release 1999)", version 3.3.0, publiée en juin 2000 par le 3GPP (3$^{rd}$ Generation Partnership Project).

Dans une autre réalisation, les contributions sommées pour former les n séquences à spectre étalé sont toutes obtenues à partir de séquences d'entrée distinctes. Le modulateur exploite alors la présence du ou des échos supplémentaires pour multiplier le débit de transmission sur le canal.

Les contributions mutuellement décalées sont avantageusement sommées avec une répartition uniforme de puissance.

On peut aussi prévoir de les sommer avec une répartition de puissance déterminée en fonction d'une information sur un nombre de stations auxquelles ont été allouées des codes d'étalement pour recevoir des signaux en provenance de l'émetteur radio. La répartition sera généralement moins uniforme lorsque beaucoup d'utilisateurs ont des codes alloués, car cela préserve mieux l'orthogonalité des codes alloués aux différents utilisateurs.

Un autre aspect de la présente invention se rapporte à un émetteur radio, comprenant n antennes d'émission, des moyens d'obtention de séquences d'entrée composées de symboles numériques, un modulateur à étalement de spectre tel que défini ci-dessus pour convertir les séquences d'entrée en n séquences à spectre étalé, des circuits de production de n signaux radiofréquence respectifs à partir des n séquences à spectre étalé et des moyens pour fournir respectivement les n signaux radiofréquence aux n antennes d'émission.

L'invention propose également un démodulateur adapté à la réception de signaux provenant d'un tel émetteur. Ce démodulateur sert à convertir m séquences à spectre étalé respectivement issues de m antennes de réception d'un récepteur radio en au moins n séquences d'estimations de symboles numériques transmis à une cadence de symboles par l'émetteur, m étant un nombre au moins égal à 1, n étant un nombre au moins égal à 2 représentant un nombre d'antennes d'émission de l'émetteur. Il comprend des moyens de détection de trajets de propagation entre les antennes d'émission et de réception, des moyens de désétalement de chacune des m séquences à spectre étalé avec un code d'étalement prédéfini pour produire des composantes d'écho à la cadence des symboles, et des moyens de combinaison des composantes d'écho pour produire les n séquences d'estimations de symboles. Selon l'invention, les composantes d'écho prises en compte comprennent au moins deux composantes d'écho pour un trajet détecté, représentant des échos associés ayant un décalage mutuel d'un temps sensiblement inférieur à la durée d'un symbole.

Un autre aspect de la présente invention se rapporte à un récepteur radio, comprenant m antennes de réception, des moyens d'obtention de m séquences à spectre étalé respectives à partir des m antennes de réception, et un démodulateur tel que défini ci-dessus pour convertir les m séquences à spectre étalé en au moins n séquences d'estimations de symboles numériques transmis par l'émetteur.

D'autres particularités et avantages de la présente invention apparaîtront dans la description ci-après d'exemples de réalisation non limitatifs, en référence aux dessins annexés, dans lesquels :

- la figure 1 est un schéma synoptique d'un mode de réalisation d'un émetteur radio selon l'invention;

- les figures 2 et 3 sont des schémas synoptiques de deux modes de réalisation d'un récepteur radio selon l'invention;

- les figures 4 à 6 sont des schémas synoptiques de variantes de réalisation de l'émetteur radio selon l'invention.

On s'intéresse à la transmission de séquences de symboles numériques $s_i$ par une technique d'étalement de spectre. Cette transmission peut notamment intervenir dans un système de radio communication cellulaire de type UMTS qui utilise la technique CDMA.

On considère un émetteur à n antennes et un récepteur à m antennes, avec n ≥2 et m ≥1. Souvent, l'émetteur fera partie d'une station de base du système cellulaire avec typiquement n = 2, tandis que le récepteur fera partie d'un terminal mobile avec typiquement m = 1. Une station de base fixe est en effet mieux adaptée à l'installation d'antennes multiples, mutuellement espacées pour être bien décorrélées. On remarquera néanmoins que le terminal pourrait comporter des antennes multiples, par exemple des antennes colocalisées à polarisations croisées. De plus, l'émetteur décrit ci-après pourrait être dans le terminal et le récepteur dans la station de base.

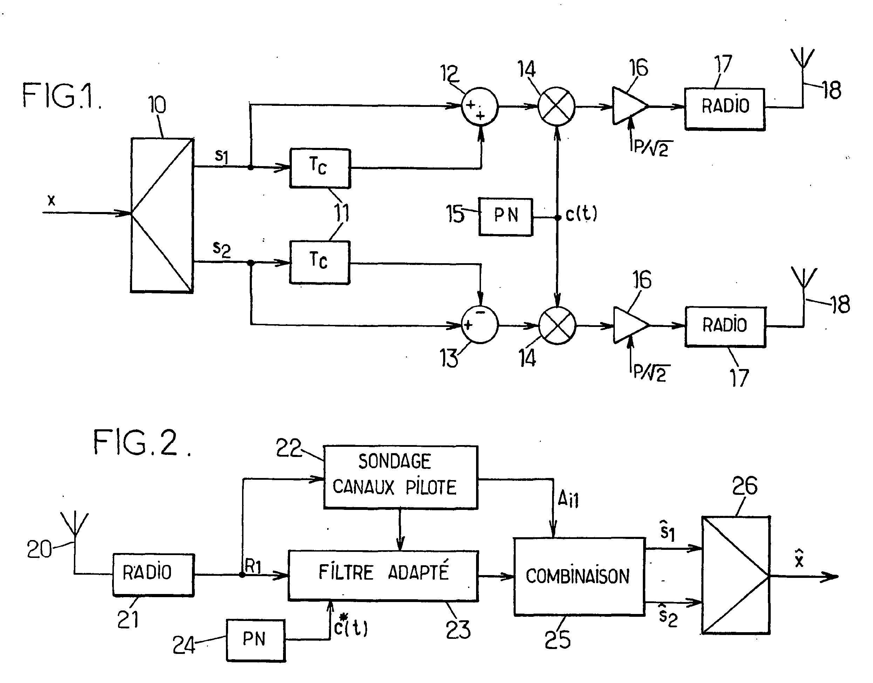

L'émetteur radio représenté sur la figure 1 comporte n = 2 antennes d'émission décorrélées 18. Il transmet sur un canal de communication une séquence binaire x destinée à un récepteur. Un code d'étalement c(t) est alloué à ce canal de communication. La cadence de chips $f_c$ = $1/T_c$ du code d'étalement est de 3,84 Mchip/s dans le cas de l'UMTS, le facteur d'étalement étant une puissance de 2 comprise entre 4 et 512.

La modulation radio employée est une modulation par déplacement de phase quaternaire (QPSK ("quaternary phase shift keying"), qui admet des symboles complexes dont les parties réelle et imaginaire modulent deux porteuses en quadrature. Un multiplexeur 10 distribue les bits x de la séquence à transmettre sur les parties réelles et imaginaires des symboles $s_1$, $s_2$ destinés aux voies d'émission sur les deux antennes 18. Il y a ainsi deux symboles $s_1$, $s_2$ émis à chaque temps symbole $T_s$ = $1/f_s$, soit quatre bits.

Pour dupliquer artificiellement les échos qui seront captés au récepteur, une version retardée de chaque symbole $s_1$, $s_2$ est générée, comme schématisé sur la figure 1 par l'élément 11 qui introduit un retard d'un temps chip $T_c$. La version retardée du symbole $s_1$ est ajoutée à sa version non retardée par l'additionneur 12, ce qui réalise le filtre $g_1(t)$ précédemment mentionné à un facteur $\sqrt{2}$ près. La version retardée du symbole $s_2$ est retranchée de sa version non retardée par le soustracteur 13, ce qui réalise le filtre $g_2(t)$ précédemment mentionné à un facteur $\sqrt{2}$ près.

Les échantillons de sortie de l'additionneur 12 et du soustracteur 13 sont multipliées en 14 par le code d'étalement c(t) du canal délivré par un générateur pseudo-aléatoire 15. Les n = 2 signaux à spectre étalé qui en résultent sont multipliés par le nombre $P/\sqrt{2}$, comme symbolisé par les amplificateurs 16, P étant un facteur de réglage de la puissance d'émission spécifié pour la paire de symboles $s_1$, $s_2$, qui est par exemple déterminé de façon classique par un asservissement en boucle fermée.

Les signaux à spectre étalé ainsi produits par le modulateur sont adressés à l'étage radio 17 qui exécute les opérations classiques de conversion en analogique, de filtrage, de modulation QPSK, d'amplification de puissance, etc., servant à produire les signaux radio attaquant les antennes 18.

La figure 2 montre un récepteur radio à m = 1 antenne de réception 20, capable de communiquer avec un émetteur selon la figure 1.

L'étage radio 21 exécute les opérations classiques d'amplification et de filtrage du signal radio capté par l'antenne 20, le transpose en bande de base ou en bande intermédiaire et le numérise pour fournir le signal à spectre étalé $R_1$ traité par le démodulateur.

Celui-ci comporte un module de sondage 22 qui calcule les corrélations du signal $R_1$ avec des signaux de balise respectivement alloués aux antennes d'émission. Dans le cas des liaisons descendantes (d'une station de base vers un terminal) chaque antenne de la station de base a un canal pilote dit CPICH ("Common Pilot Channel"), de facteur d'étalement 256, sur lequel est émis un signal de balise décrit dans la section 5.3.1. de la spécification technique 3G TS 25.211, version 3.3.0, « Physical Channels and Mapping of Transport Channels onto Physical Channels (FDD) - Release 1999 », publiée en juin 2000 par le 3GPP.

Le module de sondage 22 permet au récepteur d'estimer les p retards associés à p trajets de propagation pour chaque antenne de l'émetteur et les n vecteurs $A_{i1}$ correspondants ($1 \leq i \leq n$). En pratique, les retards sont les mêmes pour les différentes antennes d'émission, car une distance de l'ordre du mètre entre les antennes, suffisante pour assurer la décorrélation, représente un décalage temporel négligeable, de l'ordre du centième de la durée d'un chip.

Les p retards estimés sont fournis à un filtre adapté 23 qui reçoit le signal à spectre étalé $R_1$ et le désétale en le convoluant avec le complexe conjugué c*(t) du code d'étalement du canal de communication, délivré par le générateur pseudo-aléatoire 24. La sortie du filtre adapté 23 est échantillonnée aux instants correspondants aux p retards estimés, ce qui fournit les mp = p premières composantes du vecteur Z (cas m = 1). Selon l'invention, la sortie du filtre adapté 23 est en outre échantillonnée aux instants correspondants aux p retards estimés plus un temps chip, ce qui fournit mp = p composantes supplémentaires du vecteur Z.

Un module 25 combine les composantes du vecteur Z en tenant compte de coefficients pondérateurs déduits des vecteurs $A_{i1}$ estimés par le module de sondage 22. La combinaison restitue les estimations $\hat{s}_1$, $\hat{s}_2$ des symboles transmis $s_1$, $s_2$, que le démultiplexeur 26 trie pour construire la séquence binaire estimée $\hat{x}$.

Le module de combinaison 25 peut notamment déterminer $\hat{S} = \begin{bmatrix} \hat{s}_1 \\ \hat{s}_2 \end{bmatrix}$ selon la méthode MMSE classique:

$$\hat{S} = \left(\Phi^{*}\Phi\right)^{-1}\Phi^{*}Z \qquad (4)$$

étant donné que, du fait des échos supplémentaires introduits artificiellement (positionnés à la fin du vecteur Z), le système à résoudre est devenu:

$$Z = \Phi S + N \qquad (5)$$

Lorsque l'émetteur est conforme à la figure 1, la matrice $\Phi$ des expressions (4) et (5) est donnée par:

$$\Phi = \frac{1}{\sqrt{2}}\begin{bmatrix} A_{11} & A_{21} \\ A_{11} & -A_{21} \end{bmatrix} \qquad (6)$$

Dans le cas de la figure 2 où m = 1, lorsqu'un seul trajet de propagation est identifié par le module 22 (p = 1, $A_{11} = [a_{111}]$, $A_{21} = [a_{211}]$), on voit que le système classique (2) est insoluble car le nombre de lignes, et donc le rang, de la matrice H = $[a_{111}\ a_{211}]$ est plus petit que le nombre n d'antennes de l'émetteur. Cependant, le fait d'avoir introduit les échos artificiels supplémentaires à l'émetteur permet de surmonter ce problème en procédant aux estimations selon (4).

Si deux trajets de propagation sont identifiés par le module 22 $(p = 2,$ $A_{11} = \begin{bmatrix} a_{111} \\ a_{112} \end{bmatrix}$, $A_{21} = \begin{bmatrix} a_{211} \\ a_{212} \end{bmatrix})$, le système (2) sera généralement soluble car le rang de la matrice $H = \begin{bmatrix} a_{111} & a_{211} \\ a_{112} & a_{212} \end{bmatrix}$ est généralement mp = 2 = n. Le fait d'avoir introduit les échos artificiels supplémentaires à l'émetteur permet ici d'améliorer, en présence d'évanouissements, le conditionnement de la matrice $\Phi$ utilisée dans la combinaison selon (4).

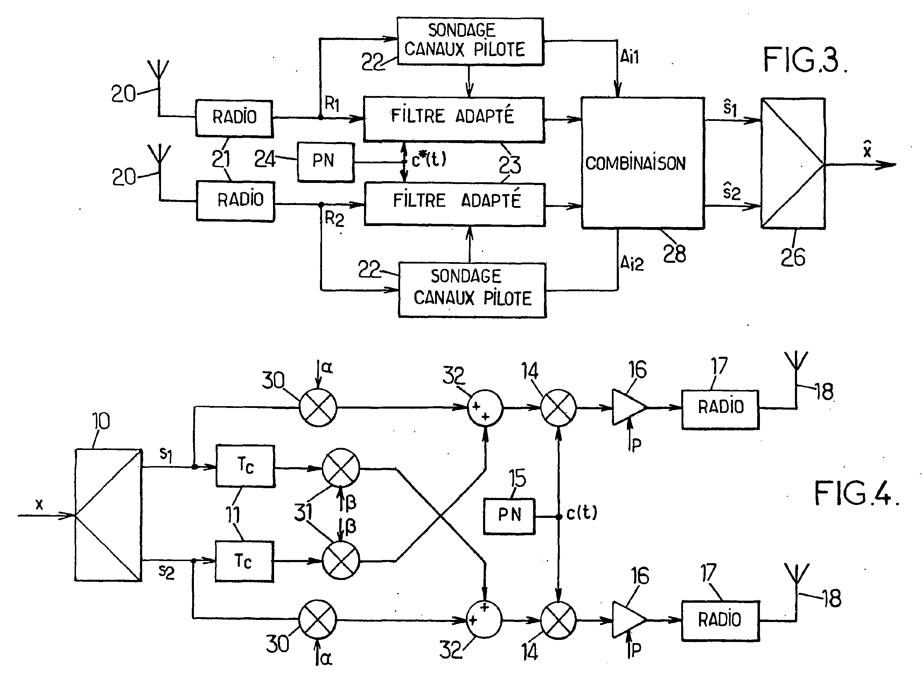

Le récepteur radio illustré par la figure 3 possède m = 2 antennes de réception décorrélées 20, ce qui assure que le système (2) soit toujours soluble. Là aussi, l'augmentation artificielle du nombre de trajets améliore généralement le conditionnement de la matrice du canal.

Chaque antenne 20 est associée à une chaîne de réception 21-23 identique à celle décrite en référence à la figure 3. Le module de combinaison 28 détermine les deux symboles estimés $\hat{s}_1$, $\hat{s}_2$ selon (4), avec:

$$\Phi = \frac{1}{\sqrt{2}}\begin{bmatrix} A_{11} & A_{21} \\ A_{12} & A_{22} \\ A_{11} & -A_{21} \\ A_{12} & -A_{22} \end{bmatrix} \qquad (7)$$

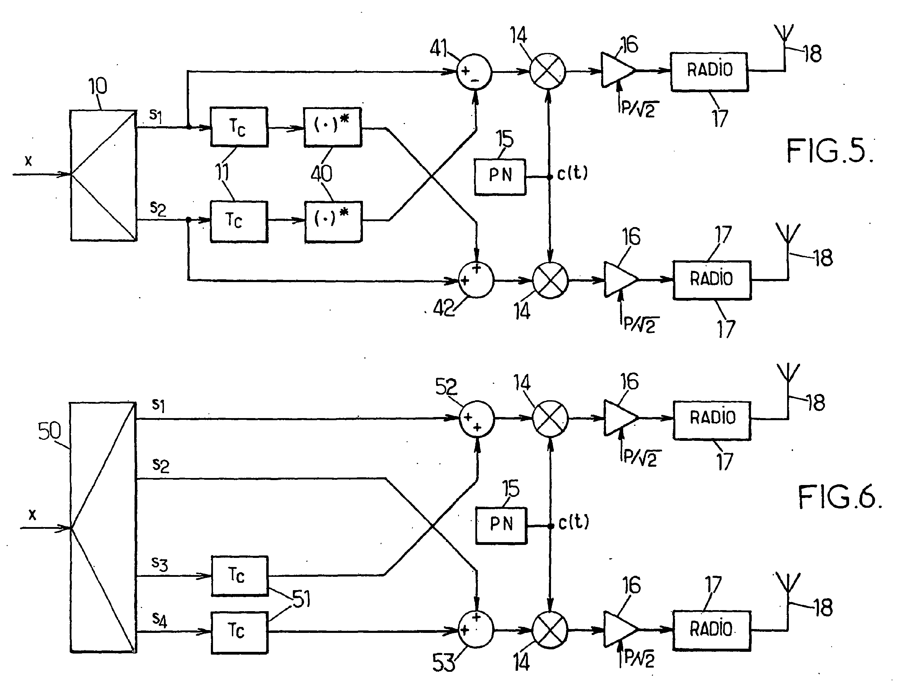

Les figures 4 et 5 montrent des variantes préférées de l'émetteur de la figure 1, dans lesquelles le traitement appliqué pour introduire des échos supplémentaires n'est pas un simple filtrage des symboles destinés aux antennes d'émission. Dans l'écho artificiellement créé, les symboles $s_1$, $s_2$ relatifs aux deux antennes sont permutés, de sorte qu'on profite de la diversité spatiale.

Dans le cas de la figure 4, après avoir respectivement émis $\alpha.s_1$ et $\alpha.s_2$ sur les n = 2 antennes, on ré-émet $\beta.s_2$ et $\beta.s_1$, par exemple $T_c$ plus tard, de sorte qu'on opère une permutation de symboles et une pondération des échos par des coefficients $\alpha$ et $\beta$ tels que $|\alpha|^2 + |\beta|^2 = 1$. La pondération par le coefficient $\alpha$ est appliquée aux symboles par les multiplieurs 30, et la pondération par le coefficient β est appliquée aux symboles retardés par les multiplieurs 31. Deux additionneurs 32 font respectivement la somme des deux contributions pour les deux antennes d'émission.

La matrice Φ utilisée par le module de combinaison du récepteur selon la relation (4) devient alors:

$$\Phi = \begin{bmatrix} \alpha A_{11} & \alpha A_{21} \\ \beta A_{21} & \beta A_{11} \end{bmatrix} \tag{8}$$

dans le cas d'un récepteur à m = 1 antenne (figure 2), et:

$$\Phi = \begin{bmatrix} \alpha A_{11} & \alpha A_{21} \\ \alpha A_{12} & \alpha A_{22} \\ \beta A_{21} & \beta A_{11} \\ \beta A_{22} & \beta A_{12} \end{bmatrix} \tag{9}$$

dans le cas d'un récepteur à m = 2 antennes (figure 3).

La pondération peut être uniforme, comme dans le cas de la figure 1, soit $|\alpha| = |\beta| = 1/\sqrt{2}$ . Elle peut aussi varier en fonction du nombre de codes alloués en CDMA. La duplication des échos fait perdre l'orthogonalité stricte des codes employés, de sorte qu'il est avantageux de déséquilibrer la pondération (α tend vers 1 et β vers 0) lorsque le nombre de codes alloués à des utilisateurs augmente.

Afin de faciliter la démodulation au niveau du récepteur, la permutation des symboles peut faire intervenir une opération de conjugaison complexe des symboles. C'est ce qui est réalisé dans le modulateur de la figure 5, qui ré-émet $-s_2^*/\sqrt{2}$ et $s_1^*/\sqrt{2}$ comme échos artificiels (pondération uniforme). Les complexes conjugués des symboles retardés sont obtenus par des modules respectifs 40. Un soustracteur 41 calcule la différence $s_1(t) - s_2^*(t-T_c)$, tandis qu'un additionneur 42 calcule la somme $s_2(t) + s_1^*(t-T_c)$. Le reste du modulateur est semblable à celui de la figure 1.

La matrice Φ utilisée par le module de combinaison du récepteur selon la relation (4) devient alors:

$$\Phi = \frac{1}{\sqrt{2}} \begin{bmatrix} A_{11} & A_{21} \\ A_{21}^* & -A_{11}^* \end{bmatrix} \tag{10}$$

dans le cas d'un récepteur à m = 1 antenne (figure 2), et:

$$\Phi = \frac{1}{\sqrt{2}} \begin{bmatrix} A_{11} & A_{21} \\ A_{12} & A_{22} \\ A_{21}^* & -A_{11}^* \\ A_{22}^* & -A_{12}^* \end{bmatrix} \tag{11}$$

dans le cas d'un récepteur à m = 2 antennes (figure 3).

On obtient alors l'important avantage que la matrice du canal Φ est orthogonale:

$$\Phi^* \Phi = \left( \sum_{i,j} A_{ij}^* A_{ij} \right) I_n \qquad (12)$$

$I_n$ désignant la matrice identité de taille n×n. Dans ces conditions, les méthodes MMSE et MLSE sont équivalentes

$$( \hat{S} = \frac{1}{\sum_{i,j} A_{ij}^* A_{ij}} \Phi^* Z ),$$ et la complexité de calcul requise est réduite.

Il est encore possible d'émettre d'autres symboles sur les différentes répliques afin d'augmenter le débit grâce à la multiplication des trajets. Dans ce cas, les contributions sommées pour former les n séquences à spectre étalé sont toutes obtenues à partir de séquences d'entrée distinctes. Par exemple, on émet respectivement $s_1 / \sqrt{2}$ et $s_2 / \sqrt{2}$ sur les n = 2 antennes, puis $s_3 / \sqrt{2}$ et $s_4 / \sqrt{2}$ et ainsi de suite. Il y a alors 2n séquences de symboles $s_1$, $s_2$, $s_3$, $s_4$ en entrée du modulateur.

C'est ce qui est illustré sur la figure 6, où le multiplexeur d'entrée 50 produit 2n = 4 séquences de symboles quaternaires. Quatre symboles $s_1$, $s_2$, $s_3$, $s_4$ sont ainsi émis en un temps symbole au moyen de n = 2 antennes. Les symboles $s_3$ et $s_4$ sont retardés d'un temps chip par l'élément 51. Un premier additionneur 52 calcule la somme $s_1(t) + s_3(t-T_c)$, tandis qu'un second additionneur 53 calcule la somme $s_2(t) + s_4(t-T_c)$. Le reste du modulateur est semblable à celui de la figure 1.

Le démodulateur correspondant, dont le nombre d'antennes m doit alors être au moins égal à n, détecte les p trajets réels à l'aide du canal pilote, et affecte ces p trajets aux symboles $s_1$ et $s_2$ et les mêmes p trajets décalés d'un temps chip aux symboles $s_3$ et $s_4$.

La matrice $\Phi$ utilisée par le module de combinaison du récepteur à m = 2 antennes pour estimer $\hat{S} = \begin{bmatrix} \hat{s}_1 \\ \hat{s}_2 \\ \hat{s}_3 \\ \hat{s}_4 \end{bmatrix}$

selon la relation (4) devient alors:

$$\Phi = \frac{1}{\sqrt{2}} \begin{bmatrix} A_{11} & A_{21} & 0 & 0 \\ A_{12} & A_{22} & 0 & 0 \\ 0 & 0 & A_{11} & A_{21} \\ 0 & 0 & A_{12} & A_{22} \end{bmatrix} \qquad (13)$$

Le contrôle du processus de modulation et de démodulation peut avantageusement prendre en compte des informations sur la richesse du canal en multitrajets, c'est-à-dire sur le nombre p, afin de décider si la génération artificielle de trajets supplémentaires doit ou non être appliquée.

De telles informations peuvent par exemple être fournies par le terminal mobile et/ou par la station de base de la manière décrite dans WO 03/005753. Elles peuvent aussi être résumées par des mesures de variance comme décrit dans la demande de brevet français n° 02 04251 .

A titre d'exemple, on peut commander conjointement le modulateur et le démodulateur pour qu'ils fonctionnent:

- de la manière décrite précédemment, avec augmentation artificielle du nombre d'échos, lorsque le canal de propagation ne génère par lui-même qu'un seul trajet significatif (p = 1); et

- de manière classique en présence de multitrajets (p > 1).

Ceci permet de réserver l'usage plus important fait des ressources de calcul du récepteur aux cas où le gain procuré par la méthode est le plus important.

**Revendications**

1. Modulateur à étalement de spectre pour convertir des séquences d'entrée ($s_i$) composées de symboles numériques en n séquences à spectre étalé dans un émetteur radio, n étant un nombre au moins égal à 2, comprenant un générateur de code d'étalement (15) et des moyens de combinaison du code d'étalement avec les séquences d'entrée pour produire les n séquences à spectre étalé pour l'émission depuis n antennes respectives (18) de l'émetteur radio, **caractérisé en ce que** les moyens de combinaison (11-14; 30-32; 40-42; 51-53) sont agencés pour que chaque séquence à spectre étalé corresponde à une somme d'au moins deux contributions mutuellement décalées d'un temps sensiblement inférieur à la durée d'un symbole, chaque contribution étant le produit d'une version d'une des n séquences d'entrée par le code d'étalement.

2. Modulateur selon la revendication 1, dans lequel lesdites contributions sont mutuellement décalées de la durée d'un chip du code d'étalement.

3. Modulateur selon la revendication 1 ou 2, dans lequel les contributions sommées avec décalage temporel pour former chaque séquence à spectre étalé sont respectivement obtenues à partir de séquences d'entrée distinctes.

4. Modulateur selon la revendication 3, dans lequel n = 2, dans lequel les symboles sont complexes, et dans lequel l'une des deux séquences à spectre étalé correspond à une somme d'une première et d'une seconde contributions mutuellement décalées tandis que l'autre des deux séquences à spectre étalé correspond à une somme d'une troisième et d'une quatrième contributions mutuellement décalées, la première contribution étant le produit d'une première des deux séquences d'entrée par le code d'étalement, la seconde contribution étant l'opposé du produit du complexe conjugué de la seconde séquence d'entrée par le code d'étalement, la troisième contribution étant le produit de la seconde séquence d'entrée par le code d'étalement, et la quatrième contribution étant le produit du complexe conjugué de la première séquence d'entrée par le code d'étalement.

5. Modulateur selon la revendication 1 ou 2, dans lequel n = 2, et dans lequel l'une des deux séquences à spectre étalé correspond à une somme de deux contributions identiques mutuellement décalées, égales au produit de l'une des deux séquences d'entrée par le code d'étalement, tandis que l'autre des deux séquences à spectre étalé correspond à une somme de deux contributions opposées mutuellement décalées, l'une de ces deux contributions opposées étant égale au produit de l'autre des deux séquences d'entrée par le code d'étalement.

6. Modulateur selon l'une quelconque des revendications 1 à 3, dans lequel les contributions sommées pour former les n séquences à spectre étalé sont toutes obtenues à partir de séquences d'entrée distinctes ($s_1$, $s_2$, $s_3$, $s_4$).

7. Modulateur selon l'une quelconque des revendications précédentes, dans lequel les contributions mutuellement décalées sont sommées avec une répartition uniforme de puissance.

8. Modulateur selon l'une quelconque des revendications 1 à 6, dans lequel les contributions mutuellement décalées sont sommées avec une répartition de puissance déterminée en fonction d'une information sur un nombre de stations auxquelles ont été allouées des codes d'étalement pour recevoir des signaux en provenance de l'émetteur radio.

9. Emetteur radio, comprenant n antennes d'émission, n étant un nombre au moins égal à 2, des moyens d'obtention de séquences d'entrée composées de symboles numériques, un modulateur à étalement de spectre selon l'une quelconque des revendications précédentes pour convertir les séquences d'entrée en n séquences à spectre étalé, des circuits de production de n signaux radiofréquence respectifs à partir des n séquences à spectre étalé et des moyens pour fournir respectivement les n signaux radiofréquence aux n antennes d'émission.

10. Démodulateur pour convertir m séquences à spectre étalé respectivement issues de m antennes de réception d'un récepteur radio en au moins n séquences d'estimations de symboles numériques transmis à une cadence de symboles par un émetteur selon la revendication 9, m étant un nombre au moins égal à 1, n étant un nombre au moins égal à 2 représentant un nombre d'antennes d'émission de l'émetteur, le démodulateur comprenant des moyens de détection de trajets de propagation entre les antennes d'émission et de réception, des moyens de désétalement de chacune des m séquences à spectre étalé avec un code d'étalement prédéfini pour produire des composantes d'écho à la cadence des symboles, et des moyens de combinaison des composantes d'écho pour produire les séquences d'estimations de symboles, **caractérisé en ce que** les composantes d'écho comprennent au moins deux composantes d'écho pour un trajet détecté, représentant des échos associés ayant un décalage mutuel d'un temps sensiblement inférieur à la durée d'un symbole.

11. Démodulateur selon la revendication 10, dans lequel les échos associés pour un trajet détecté sont mutuellement décalés de la durée d'un chip du code d'étalement.

12. Récepteur radio, comprenant m antennes de réception, m étant un nombre au moins égal à 1, des moyens d'obtention de m séquences à spectre étalé respectives à partir des m antennes de réception, et un démodulateur selon la revendication 10 ou 11 pour convertir les m séquences à spectre étalé en séquences d'estimations de symboles numériques transmis par un émetteur.

13. Station de base de radiocommunication cellulaire, comprenant un émetteur radio selon la revendication 9 et/ou un récepteur radio selon la revendication 12.

14. Terminal de radiocommunication cellulaire, comprenant un émetteur radio selon la revendication 9 et/ou un récepteur radio selon la revendication 12.

**Claims**

1. A spread spectrum modulator for converting input sequences ($s_i$) composed of digital symbols into n spread spectrum sequences in a radio transmitter, n being a number at least equal to 2, comprising a spreading code generator (15) and means of combining the spreading code with the input sequences so as to produce the n spread spectrum sequences for transmission from n respective antennas (18) of the radio transmitter, **characterized in that** the combining means (11-14; 30-32; 40 42; 51 53) are arranged so that each spread spectrum sequence corresponds to a sum of at least two contributions mutually shifted by a time substantially less than the duration of a symbol, each contribution being the product of a version of one of the n input sequences times the spreading code.

2. The modulator as claimed in claim 1, wherein said contributions are mutually shifted by the duration of a chip of the spreading code.

3. The modulator as claimed in claim 1 or 2, wherein the contributions summed with time shift to form each spread spectrum sequence are respectively obtained on the basis of distinct input sequences.

4. The modulator as claimed in claim 3, wherein n = 2, wherein the symbols are complex, and wherein one of the two spread spectrum sequences corresponds to a sum of a first and of a second mutually shifted contributions while the other of the two spread spectrum sequences corresponds to a sum of a third and of a fourth mutually shifted contributions, the first contribution being the product of a first of the two input sequences times the spreading code, the second contribution being the opposite of the product of the complex conjugate of the second input sequence times the spreading code, the third contribution being the product of the second input sequence times the spreading code, and the fourth contribution being the product of the complex conjugate of the first input sequence times the spreading code.

5. The modulator as claimed in claim 1 or 2, wherein n = 2, and wherein one of the two spread spectrum sequences corresponds to a sum of two identical mutually shifted contributions, equal to the product of one of the two input sequences times the spreading code, while the other of the two spread spectrum sequences corresponds to a sum of two opposite mutually shifted contributions, one of these two opposite contributions being equal to the product of the other of the two input sequences times the spreading code.

6. The modulator as claimed in any one of claims 1 to 3, wherein the contributions summed to form the n spread spectrum sequences are all obtained on the basis of distinct input sequences ($s_1, s_2, s_3, s_4$).

7. The modulator as claimed in any one of the preceding claims, wherein the mutually shifted contributions are summed with a uniform distribution of power.

8. The modulator as claimed in any one of claims 1 to 6, wherein the mutually shifted contributions are summed with a distribution of power determined as a function of a cue regarding a number of stations to which spreading codes have been allocated so as to receive signals originating from the radio transmitter.

9. A radio transmitter, comprising n transmission antennas, n being a number at least equal to 2, means of obtaining input sequences composed of digital symbols, a spread spectrum modulator according to any one of the preceding claims for converting input sequences into n spread spectrum sequences, circuits for producing n respective radio frequency signals on the basis of the n spread spectrum sequences and means for providing respectively the n radio frequency signals to the n transmission antennas.

10. A demodulator for converting m spread spectrum sequences respectively arising from m reception antennas of a radio receiver into at least n sequences of estimations of digital symbols transmitted at a symbol rate by a transmitter as claimed in claim 9, m being a number at least equal to 1, n being a number at least equal to 2 representing a number of transmission antennas of the transmitter, the demodulator comprising means for detecting propagation paths between the transmission and reception antennas, means of despreading of each of the m spread spectrum sequences with a predefined spreading code so as to produce echo components at the symbol rate, and means of combining the echo components to produce the symbols estimation sequences, **characterized in that** the echo components comprise at least two echo components for a detected path, representing associated echoes having a mutual shift by a time substantially less than the duration of a symbol.

11. The demodulator as claimed in claim 10, wherein the associated echoes in respect of a detected path are mutually shifted by the duration of a chip of the spreading code.

12. A radio receiver, comprising m reception antennas, m being a number at least equal to 1, means of obtaining m respective spread spectrum sequences on the basis of the m reception antennas, and a demodulator as claimed in claim 10 or 11 for converting the m spread spectrum sequences into sequences of estimations of digital symbols transmitted by a transmitter.

13. A cellular radio communication base station, comprising a radio transmitter as claimed in claim 9 and/or a radio receiver as claimed in claim 12.

14. A cellular telecommunication terminal, comprising a radio transmitter as claimed in claim 9 and/or a radio receiver as claimed in claim 12.

**Patentansprüche**

1. Modulator mit Spektrumsspreizung zum Umwandeln von Eingangssequenzen ($s_i$), welche aus digitalen Zeichen zusammengesetzt sind, in n Sequenzen mit gespreiztem Spektrum in einem Funksender, wobei n eine Zahl ist, die wenigstens gleich 2 beträgt, umfassend einen Spereizungscodegenerator (15) und Mittel zur Kombination des Spreizungscodes mit den Eingangssequenzen, um die n Sequenzen mit gespreiztem Spektrum zu erzeugen für das Aussenden von n jeweiligen Antennen (18) des Funksenders aus,
**dadurch gekennzeichnet, dass**
die Kombinationsmittel (11-14; 30-32; 40-42; 51-53) derart ausgeführt sind, dass jede Sequenz mit gespreiztem Spektrum einer Summe von wenigstens zwei zueinander verschobenen Anteilen mit einer wesentlich kleineren Zeitdauer als die Dauer eines Zeichens entspricht, wobei jeder Anteil das Produkt einer Version einer der n Eingangssequenzen durch den Spreizungsscode ist.

2. Modulator nach Anspruch 1, bei dem die Anteile um die Dauer eines Chips des Spreizungscodes zueinander verschoben sind.

3. Modulator nach Anspruch 1 oder 2, bei dem die Anteile, welche mit zeitlicher Verschiebung zum Bilden jeder Sequenz mit gespreiztem Spektrum summiert sind, jeweils ausgehend von unterschiedlichen Eingangssequenzen erhalten sind.

4. Modulator nach Anspruch 3, bei dem n = 2 ist, bei dem die Zeichen komplex sind, und bei dem eine der beiden Sequenzen mit gespreiztem Spektrum einer Summe eines ersten und eines zweiten, zueinander verschobenen Anteils entspricht, wohingegen die andere der beiden Sequenzen mit gespreiztem Spektrum einer Summe eines dritten und eines vierten, zueinander verschobenen Anteils entspricht, wobei der ersten Anteil das Produkt einer ersten der beiden Eingangssequenzen durch den Spreizungsscode ist, der zweite Anteil das Gegenteil des Produkts des konjugierten Komplexes der zweiten Eingangssequenz durch den Spreizungscode ist, der dritte Anteil das Produkt der zweiten Eingangssequenz durch den Spreizungscode ist und der vierte Anteil das Produkt des konjugierten Komplexes der ersten Eingangssequenz durch den Spreizungscode ist.

5. Modulator nach Anspruch 1 oder 2, bei dem n = 2 ist, und bei dem die eine der beiden Sequenzen mit gespreiztem Spektrum einer Summe von zwei identischen, zueinander verschobenen Anteilen entspricht, welche gleich dem Produkt einer der beiden Eingangssequenzen durch den Spreizungscode sind, wohingegen die andere der beiden Sequenzen mit gespreiztem Spektrum einer Summe von zwei gegenteiligen zueinander verschobenen Anteilen entspricht, wobei einer der beiden gegenteiligen Anteile gleich dem Produkt der anderen der beiden Eingangssequenzen durch den Spreizungscode ist.

6. Modulator nach einem der Ansprüche 1 bis 3, bei dem die summierten Anteile zum Bilden der n Sequenzen mit gespreiztem Spektrum alle ausgehend von unterschiedlichen Eingangssequenzen ($s_1$, $s_2$, $s_3$, $s_4$) erhalten sind.

7. Modulator nach einem der vorhergehenden Ansprüche, bei dem die zueinander verschobenen Anteile mit einer uniformen Leistungsverteilung summiert sind.

8. Modulator nach einem der Ansprüche 1 bis 6, bei dem die zueinander verschobenen Anteile mit einer Leistungsverteilung summiert sind, welche in Funktion einer Information über eine Anzahl von Stationen bestimmt ist, denen Spreizungscodes zugeordnet worden sind, um vom Funksender stammende Signale zu empfangen.

9. Funksender, umfassend n Sendeantennen, wobei n eine Zahl ist, die wenigstens gleich 2 beträgt, Mittel zur Gewinnung von Eingangssequenzen, welche aus digitalen Zeichen zusammengesetzt sind, einen Modulator mit Spektrumsspreizung nach einem der vorhergehenden Ansprüche zum Umwandeln der Eingangssequenzen in n Sequenzen mit gespreiztem Spektrum, Schaltungen zur Erzeugung von n jeweiligen Funkfrequenzsignalen ausgehend von den n Sequenzen mit gespreiztem Spektrum, und Mittel zum Bereitstellen von den jeweils n Funkfrequenzsignalen an den n Sendeantennen.

10. Demodulator zum Umwandeln von m Sequenzen mit gespreiztem Spektrum, welche jeweils von m Empfangsantennen eines Funkempfängers ausgegeben werden, in wenigsten n Schätzsequenzen von digitalen Zeichen, welche mit einem Zeichentakt durch einen Sender nach Anspruch 9 ausgesendet werden, wobei m eine Zahl ist, die wenigstens gleich 1 beträgt, wobei n eine Zahl ist, die wenigstens gleich 2 beträgt, was eine Anzahl von Sendeantennen des Senders repräsentiert, und wobei der Demodulator umfasst: Mittel zur Erfassung von Ausbreitungswegen zwischen den Sende- und Empfangsantennen, Mittel zur Entspreizung von jeder der m Sequenzen mit gespreiztem Spektrum mit einem vorbestimmtem Spreizungscode, um Echokomponenten mit dem Zeichentakt zu erzeugen, und Mittel zur Kombination der Echokomponenten, um die Schätzsequenzen von Zeichen zu erzeugen,
**dadurch gekennzeichnet, dass**
die Echokomponenten wenigstens zwei Echokomponenten für einen erfassten Weg umfassen, welche zugehörige Echos repräsentieren, die eine gegenseitige Verschiebung um eine wesentlich kleinere Zeitdauer als die Dauer eines Zeichens aufweisen.

11. Demodulator nach Anspruch 10, bei dem die einem erfassten Weg zugeordneten Echos um die Dauer eines Chip des Spreizungscodes zueinander verschoben sind.

12. Funkempfänger, umfassend m Empfangsantennen, wobei m eine Zahl ist, die wenigstens gleich 1 beträgt, Mittel zur Gewinnung von m jeweiligen Sequenzen mit gespreiztem Spektrum ausgehend von den m Empfangsantennen, und einen Demodulator nach Anspruch 10 oder 11, um die m Sequenzen mit gespreiztem Spektrum in Schätzsequenzen für digitale Zeichen umzuwandeln, welche durch einen Sender übertragen werden.

13. Basisstation für zelluläre Funkkommunikation, umfassend einen Funksender nach Anspruch 9 oder/und einen Funkempfänger nach Anspruch 12.

14. Endgerät für zelluläre Funkkommunikation, umfassend einen Funksender nach Anspruch 9 oder/und einen Funkempfänger nach Anspruch 12.

FIG.1.

FIG.2.

EP 1 623 514 B1

FIG.3.

FIG.4.

EP 1 623 514 B1

FIG.5.

FIG.6.

EP 1 623 514 B1